# EUROPEAN PATENT SPECIFICATION

(11) **EP 1 468 805 B1**
(45) Date of publication and mention of the grant of the patent: **03.09.2008**
(21) Application number: 03008996.5
(22) Date of filing: 17.04.2003
(51) Int. Cl.: B29C 35/08, B05C 5/02, B01J 19/12, B05D 3/06, B05D 1/00, B05D 7/06

(54) **Providing a work piece with an edge protection**
Bereitstellung eines Werkstückes mit Kantenschutz
Mise à disposition d'une pièce ayant un protège-arête

(43) Date of publication of application: 20.10.2004
(73) Proprietor: Nordson AB, 212-39 Malmoe (SE)
(72) Inventor: Svensson, Michael, Alvesta 342 34 (SE)
(74) Representative: Meier, Frank

(56) References cited:
- US-A- 4 010 374
- US-A- 4 654 233
- US-A- 5 225 170
- US-A- 5 300 331
- US-B1- 6 180 172
- NORDSON ENGINEERING GMBH: "EB 60 V, Adjustable Edge Banding Slot Gun" INTERNET ARTICLE , [Online] May 2000 (2000-05), XP002255579 Retrieved from the Internet: <URL:http://www.nordson.com/pdf/literature /PAL0986.pdf> [retrieved on 2003-10-24]

## Description

### BACKGROUND OF THE INVENTION

The present invention relates to a method and an apparatus for providing a work piece with an edge protection, in particular to providing an edge region of a work piece, e.g. a work piece having a substantial two-dimensional or batten shape, with a protection. Such work pieces can comprise all types of furniture, desks, countertops, shelf, tabletops, chipboards, window frames etc. Furthermore, the present invention relates to a work piece with an edge protection.

It is known in the prior art to provide an edge region of a substantial two-dimensional or batten shaped work piece with an edge band as an edge protection. Known methods use edge bands which can be applied to the work piece, e.g. a chipboard, by first applying a layer of glue to the edge region of the chipboard and then the edge band is attached to the glue and thereby fixed to the edge of the chipboard. The reason for such an edge band is primarily to protect the chipboard from moisture etc., but also to make the edge of the chipboard look nicer.

US 6,180,172 B1 discloses a process and an apparatus for edge coating of a substrate. The processes includes applying a layer of a coating material to the edge surface of a substate to produce a smooth surface and to afford protection against mechanical stressing. This known process is particularly suitable for wooden materials. According to this prior art document the coating material may be applied by a number of different means. The coating material according to this document may be an UV-crosslinking system.

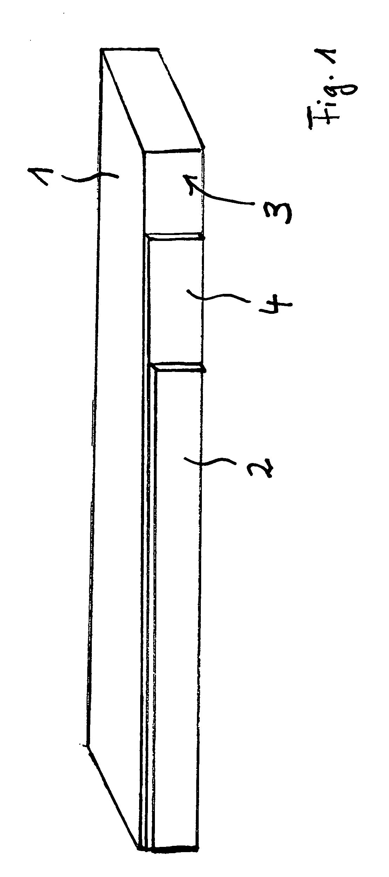

Fig. 1 shows a schematic illustration of such a known chipboard 1 provided with an edge band 2 which is fixed to an edge region 3 of chipboard 1 by means of a previously supplied layer 4 of glue.

### SUMMARY OF THE INVENTION

It is an object of the present invention to provide an improved method and an improved apparatus for providing a work piece with an edge protection. It is another object of the present invention to provide an improved work piece having an edge protection.

The object is solved by the independent claims.

According to preferred embodiments of the present invention it is possible to replace both a glue layer and an edge band known from the prior art (see Fig. 1). Therefore, due to the elimination of the edge band of the prior art and several production steps, simpler and thereby cheaper machine equipment can be used for the production of such edge protections. Moreover, it is possible to paint and/or grind the edge region and/or the whole work piece immediately after having supplied the layer of UV hardening material.

Additionally, a higher quality of the used UV hardening material is provided by the invention since the surface of UV hardening material is harder with respect to known edge band materials, so that the resulting edge protection is less sensible to cuts and the like, i.e, the work piece has a better protection against cuts compared to the prior art.

Other preferred embodiments are shown by the dependent claims.

### BRIEF DESCRIPTION OF THE DRAWINGS

Other objects and many of the attendant advantages of the present invention will be readily appreciated and become better understood by reference to the following detailed description when considering in connection with the accompanied drawings. The components in the drawings are not necessarily to scale, emphasis instead being placed upon clearly illustrating the principles of the present invention. Features that are substantially or functionally equal or similar will be referred to with the same reference sign(s).
- Fig. 1: shows a schematic illustration of a work piece with an edge band according to the prior art as described above, and
- Fig. 2: shows a schematic illustration of a preferred embodiment of the present invention.

### DETAILED DESCRIPTION OF PREFERRED EMBODIMENTS OF THE INVENTION

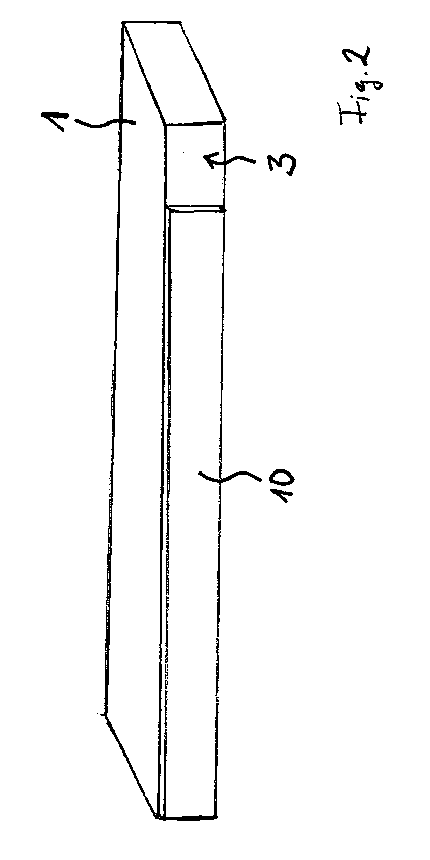

Referring now in greater detail to the drawings, Fig. 2 shows a schematic illustration of a preferred embodiment of the present invention for providing a work piece with an edge protection.

According to Fig. 2 as a work piece a chipboard 1 is shown. However, alternatively such a work piece be any type of furniture, desk, countertop, shelf, tabletop, window frame etc. The displayed chipboard 1 has a substantial two-dimensional or batten shape and has an edge region 3.

Edge region 3 is to be protected by an edge protection to protect chipboard 1 from moisture etc., but also to make the edge region 3 of chipboard 1 look nicer. For this purpose on the edge region 3 there is applied a layer 10 of a UV hardening material.

Layer 10 replaces both glue layer 4 and edge band 2 known from the prior art (see Fig. 1). The UV hardening material of layer 10 is applied in a fluid or soft condition as a flat layer 10 to the edge region 3 by means of a slot gun (not shown). As a slot gun any suitable known slot gun can be used, e.g. a slot gun with the trade name "EB 60V" available from the company "NORDSON CORPORATION, 28601 Clemens Road, Westlake, Ohio 44145-1119, U.S.A".

For further details of such a slot gun and a way to apply soft or fluidic material in the shape of a layer see EP 1 205 257 A1 the disclosure of which is fully incorporated herein by reference.

The originally soft material of layer 10 is then hardened and/or cured by exposing layer 10 to UV light of a UV radiation source (not shown). The UV exposure can be performed instantly, i.e. substantially parallel to the application of layer 10 or it can be performed later.

When the material of layer 10 is hardened it is possible to grind and paint layer 10, if necessary. Actually it has been found that UV hardening material is even better suited for being painted when hardened than the materials of known edge bands of the prior art since it is harder.

As UV hardening material of layer 10 any suitable known UV hardening material can be used, e.g. UV hardening material with the trade name "nr 97013" available from the company "Akzo Nobel", as well as any UV hardening material available from the company "Beckers -Acroma".

As a UV radiation source any suitable known lamp emitting UV radiation can be used for hardening the UV hardening material of layer 10, e.g. a UV radiation source comprising a mercury and/or a gallium lamp emitting UV radiation suitable for hardening the UV hardening material of layer 10.

## Claims

1. A method of providing a work piece (1) with an edge protection (10), in particular of providing an edge region (3) of a work piece (1) having a substantial two-dimensional or batten shape with a protection (10), comprising the steps of:
applying a layer (10) of UV hardening material to an edge region (3) of the work piece (1),
exposing the layer (10) of UV hardening material to UV radiation,
using a slot gun to apply the layer (10) of UV hardening material to the edge region (3) of the work piece (1), and
exposing the layer (10) of UV hardening material to UV radiation simultaneously to applying the layer (10) of UV hardening material to the edge region (3) of the work piece (1).

2. The method of claim 1 or any one of the above claims further comprising the steps of:
painting and/or grinding the edge region (3) immediately after having applied the layer (10) of UV hardening material to the edge region (3), preferably immediately after having exposed the layer (10) of UV hardening material to UV radiation.

3. The method of claim 1 or any one of the above claims, further comprising the steps of:
painting and/or grinding the whole work piece (1) immediately after having applied the layer (10) of UV hardening material to the edge region (3), preferably immediately after having exposed the layer (10) of UV hardening material to UV radiation.

4. The method of claim 1 or any one of the above claims, further comprising the steps of:
using as UV hardening material for the layer (10) material which can be fixed permanently to the edge region (3) of the work piece (1).

5. An apparatus for providing a work piece (1) with an edge protection (10), in particular for providing an edge region (3) of a work piece (1) having a substantial two-dimensional or batten shape with a protection (10), comprising:
an application device for applying a layer (10) of UV hardening material to an edge region (3) of the work piece (1), wherein the application device comprises a slot gun to apply the layer (10) of UV hardening material to the edge region (3) of the work piece (1),
a UV radiation source for exposing the layer (10) of UV hardening material to UV radiation, and
wherein the application device and the UV radiation source are arranged with respect to each other in a way that the UV radiation source can expose the layer (10) of UV hardening material to UV radiation simultaneously to the application device applying the layer (10) of UV hardening material to the edge region (3) of the work piece (1).

6. The apparatus of claim 5, further comprising:
a painting and/or grinding unit for painting and/or grinding the edge region (3), the painting and/or grinding unit arranged with respect to the application device and the UV radiation source in a way that immediately after the application device has applied the layer (10) of UV hardening material to the edge region (3), preferably immediately after having exposed the layer (10) of UV hardening material to UV radiation, the painting and/or grinding unit can paint and/or grind the edge region (3) and/or the whole work piece (1).

7. The apparatus of any one of the above claims 5 or 6, further comprising:
wherein the UV radiation source comprises a mercury and/or a gallium lamp emitting UV radiation.

## Patentansprüche

1. Verfahren zum Versehen eines Werkstückes (1) mit einem Randschutz (10), insbesondere zum Versehen einer Randregion (3) eines Werkstückes (1) mit einer im Wesentlichen zweidimensionalen oder leistenförmigen Form mit einem Schutz (10), die Schritte aufweisend:
Aufbringen einer Schicht (10) auf UV-härtendem Material auf eine Randregion (3) des Werkstückes (1),
Exponieren der Schicht (10) aus UV-härtendem Material gegenüber UV-Strahlung,
Verwenden einer Schlitzpistole, um die Schicht (10) aus UV-härtendem Material auf die Randregion (3) des Werkstückes (1) aufzutragen, und
Exponieren der Schicht (10) aus UV-härtendem Material gegenüber UV-Strahlung gleichzeitig mit dem Auftragen der Schicht (10) aus UV-härtendem Material auf die Randregion (3) des Werkstückes (1).

2. Verfahren nach Anspruch 1 oder einem der vorstehenden Ansprüche, weiterhin die Schritte aufweisend:
Streichen und/oder Schleifen der Randregion (3) unmittelbar nach dem Aufbringen der Schicht (10) aus UV-härtendem Material auf die Randregion (3), bevorzugt unmittelbar nachdem die Schicht (10) aus UV-härtendem Material der UV-Strahlung ausgesetzt worden ist.

3. Verfahren nach Anspruch 1 oder einem der vorstehenden Ansprüche, weiterhin die Schritte aufweisend:
Streichen und/oder Schleifen des gesamten Werkstückes (1) unmittelbar nachdem die Schicht (10) aus UV-härtendem Material auf die Randregion (3) aufgebracht worden ist, bevorzugt unmittelbar nachdem die Schicht (10) aus UV-härtendem Material der UV-Strahlung ausgesetzt worden ist.

4. Verfahren nach Anspruch 1 oder einem der vorstehenden Ansprüche, weiterhin die Schritte aufweisend:
Verwenden eines UV-härtenden Materials für das Material der Schicht (10), welches Material permanent an der Randregion (3) des Werkstückes (1) fixiert werden kann.

5. Vorrichtung zum Versehen eines Werkstückes (1) mit einem Randschutz (10), insbesondere zum Versehen einer Randregion (3) eines Werkstückes (1) mit einer im Wesentlichen zweidimensionalen oder leistenförmigen Form mit einem Schutz (10), aufweisend:
ein Aufbringgerät zum Aufbringen einer Schicht (10) aus UV-härtendem Material auf einer Randregion (3) des Werkstückes (1), wobei das Aufbringgerät eine Schlitzpistole zum Aufbringen der Schicht (10) aus UV-härtendem Material auf die Randregion (3) des Werkstückes (1) aufweist,
eine UV-Strahlungsquelle zum Exponieren der Schicht (10) aus UV-härtendem Material gegenüber UV-Strahlung, und
wobei das Aufbringgerät und die UV-Strahlungsquelle in einer Weise zu einander angeordnet sind, dass die UV-Strahlungsquelle die Schicht (10) aus UV-härtendem Material gleichzeitig mit dem Aufbringen der Schicht (10) aus UV-härtendem Material auf die Randregion (3) des Werkstückes (1) durch das Aufbringgerät gegenüber UV-Strahlung exponieren kann.

6. Vorrichtung nach Anspruch 5, weiter aufweisend:
eine Streich- und/oder Schleifeinheit zum Streichen und/oder Schleifen der Randregion (3), wobei die Streich- und/oder Schleifeinheit mit Bezug auf das Aufbringgerät und die UV-Strahlungsquelle in einer Weise angeordnet ist, dass die Streich- und/oder Schleifeinheit die Randregion (3) und/oder das gesamte Werkstück (1) streichen und/oder schleifen kann, unmittelbar nachdem das Aufbringgerät die Schicht (10) aus UV-härtendem Material auf die Randregion (3) aufgebracht hat, bevorzugt unmittelbar nachdem die Schicht (10) aus UV-härtendem Material der UV-Strahlung ausgesetzt worden ist.

7. Vorrichtung nach einem der vorstehenden Ansprüche 5 oder 6, weiter aufweisend:
wobei die UV-Strahlungsquelle eine Quecksilber- und/oder eine Gallium-Lampe aufweist, die UV-Strahlung emittiert.

## Revendications

1. Procédé d'équipement d'une pièce (1) avec un protège-arêtes (10), en particulier d'équipement d'une région de bordure (3) d'une pièce (1), ayant une forme pratiquement bidimensionnelle ou en baguette, avec une protection (10), comprenant les étapes ci-dessous:
application d'une couche (10) de matériau durcissant aux UV sur une région de bordure (3) de la pièce (1);
exposition de la couche (10) de matériau durcissant aux UV à un rayonnement UV;
utilisation d'un pistolet à fentes pour appliquer la couche (10) de matériau durcissant aux UV sur la région de bordure (3) de la pièce (1); et
exposition de la couche (10) de matériau durcissant aux UV à un rayonnement UV, de manière simultanée à l'application de la couche (10) de matériau durcissant aux UV sur la région de bordure (3) de la pièce (1).

2. Procédé selon la revendication 1 ou selon l'une quelconque des revendications ci-dessus, comprenant en outre les étapes ci-dessous:
peinture et/ou rectification de la région de bordure (3), immédiatement après l'application de la couche (10) de matériau durcissant aux UV sur la région de bordure (3), de préférence immédiatement après l'exposition de la couche (10) de matériau durcissant aux UV au rayonnement UV.

3. Procédé selon la revendication 1 ou selon l'une quelconque des revendications ci-dessus, comprenant en outre les étapes ci-dessous:
peinture et/ou rectification de l'ensemble de la pièce (1) immédiatement après l'application de la couche (10) de matériau durcissant aux UV sur la région de bordure (3), de préférence immédiatement après l'exposition de la couche (10) de matériau durcissant aux UV à un rayonnement UV.

4. Procédé selon la revendication 1 ou selon l'une quelconque des revendications ci-dessus, comprenant en outre les étapes ci-dessous:
utilisation comme matériau durcissant aux UV pour la couche (10) d'un matériau pouvant être fixé de manière permanente sur la région de bordure (3) de la pièce (1).

5. Appareil pour équiper une pièce (1) avec un protège-arêtes (10), en particulier pour équiper une région de bordure (3) d'une pièce (1) ayant une forme pratiquement bidimensionnelle ou en baguette, d'une protection (10), comprenant:
un dispositif d'application pour appliquer une couche (10) de matériau durcissant aux UV sur une région de bordure (3) de la pièce (1), le dispositif d'application comprenant un pistolet à fentes pour appliquer la couche (10) de matériau durcissant aux UV sur la région de bordure (3) de la pièce (1);
une source de rayonnement UV pour exposer la couche (10) de matériau durcissant aux UV à un rayonnement UV; et
le dispositif d'application et la source de rayonnement UV étant agencés l'un par rapport à l'autre de sorte que la source de rayonnement UV peut exposer la couche (10) de matériau durcissant aux UV à un rayonnement UV de manière simultanée à l'application par le dispositif d'application de la couche (10) de matériau durcissant aux UV sur la région de bordure (3) de la pièce (1).

6. Appareil selon la revendication 5, comprenant en outre:
une unité de peinture et/ou de rectification pour peindre et/ou rectifier la région de bordure (3), l'unité de peinture et/ou de rectification étant agencée par rapport au dispositif d'application et à la source de rayonnement UV de sorte qu'immédiatement après l'application par le dispositif d'application de la couche (10) de matériau durcissant aux UV sur la région de bordure (3), de préférence immédiatement après l'exposition de la couche (10) de matériau durcissant aux UV à un rayonnement UV, l'unité de peinture et/ou de rectification peut peindre et/ou rectifier la région de bordure (3) et/ou l'ensemble de la pièce (1).

7. Appareil selon l'une quelconque des revendications 5 ou 6, dans lequel
la source de rayonnement UV comprend une lampe à mercure et/ou à gallium émettant un rayonnement UV.
